# EUROPÄISCHE PATENTSCHRIFT

(11) **EP 1 543 311 B1**
(45) Veröffentlichungstag und Bekanntmachung des Hinweises auf die Patenterteilung: **15.06.2011**
(21) Anmeldenummer: 03750320.8
(22) Anmeldetag: 04.09.2003
(51) Int. Cl.: G01N 1/06

(54) **ROTATIONSMIKROTOM**
ROTARY MICROTOME
MICROTOME ROTATIF

(30) Priorität: 24.09.2002 DE 10244687
(43) Veröffentlichungstag der Anmeldung: 22.06.2005
(73) Patentinhaber: pfm medical ag, 50966 Köln (DE); Hirt, Rüdiger, 68637 St. Leon-Rot (DE)
(72) Erfinder: KRAUS, Steffen, 69168 Wiesloch (DE); SCHNEIDER, Erwin, 69226 Nussloch (DE)
(74) Vertreter: Naumann, Ulrich
(86) Internationale Anmeldenummer: PCT/DE2003/002948
(87) Internationale Veröffentlichungsnummer: WO 2004/029587

(56) Entgegenhaltungen:
- DE-A- 4 307 750
- DE-A- 4 339 071
- DE-A- 10 104 432
- DE-C- 3 603 278
- DE-U- 8 809 096
- DE-U1- 20 202 043
- US-A- 3 212 379
- BORRIES VON B ET AL: "UEBER EIN ULTRAMIKROTOM" ZEITSCHRIFT FUR WISSENSCHAFTLICHE MIKROSKOPIE UND FUR MIKROSKOPISCHE TECHNIK, HIRZEL VERLAG, STUTTGART,, DE, Bd. 63, 1958, Seiten 484-494, XP008008881 ISSN: 0373-031X

## Beschreibung

Die Erfindung betrifft ein Rotationsmikrotom, mit einem Mikrometerwerk, einer dem Mikrometerwerk zugeordneten Objekthalteeinrichtung, einem Antrieb für das Mikrometerwerk zum vertikalen Bewegen der Objekthalteeinrichtung, einem Gestell zur Aufnahme des Mikrometerwerks und ggf. des Antriebs, wobei das Gestell eine umlaufende Wandung umfasst und dabei ein monolithisches Gehäuse bildet, einer gegenüber der Objekthalteeinrichtung außerhalb des Gehäuses angeordneten, ein Messer tragenden Messerhalteeinrichtung, wobei das Mikrometerwerk eine die Objekthalteeinrichtung tragende Zustelleinrichtung vertikal auf und ab bewegt, wobei die Zustelleinrichtung eine drehangetriebene Spindel und einen über die Spindel horizontal verfahrbaren Zustellkolben umfasst, an dessen freiem Ende die Objekthalteeinrichtung angelenkt ist, und wobei sich die Spindel antriebsseitig in den Zustellkolben hinein erstreckt und sich gegen einen Rahmen abstützt.

Mikrotome dienen ganz überwiegend zur Herstellung von Paraffin-Schnitten an entsprechend eingebetteten Proben im Bereich der Biologie, Medizin und industriellen Forschung. Neben den in mechanischer Hinsicht aufwendigen Rotationsmikrotomen gibt es in konstruktiver Hinsicht einfachere Schlittenmikrotome, bei denen entweder ein Probenkörper relativ zu einem feststehenden Schneidmesser oder ein Schneidmesser relativ zu einem feststehenden Probenkörper zum Zwecke der Probenahmen bewegt wird. Die Bewegung erfolgt durch lineares Verfahren eines Schlittens. Bei Rotationsmikrotomen wird die Drehbewegung eines Antriebs in eine vertikale Linearbewegung eines Schlittens mit Probenhalter und Probenkörper umgesetzt, wobei der Probenkörper einem feststehenden Schneidmesser gemäß definierbarem Vorschub zugestellt wird.

Die Zustellung des Probenkörpers zum Schneidmesser ist erforderlich, um nämlich je Schneidvorgang eine bestimmte Schnittdicke realisieren zu können. Diese Zustellbewegung erfolgt beim Rotationsmikrotom seitens des Probenkörpers relativ zum Schneidmesser, und zwar orthogonal zur Schnittebene.

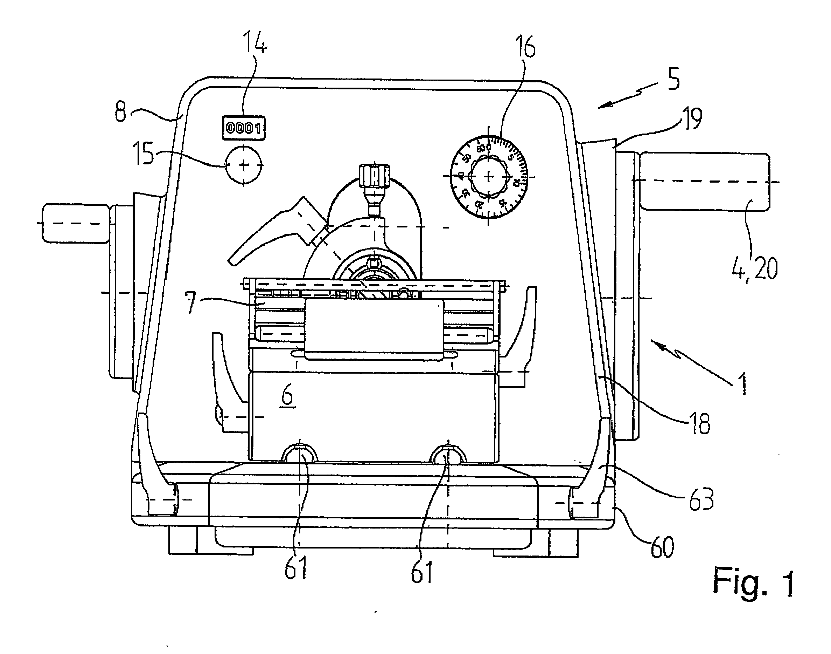

Rotationsmikrotome der gattungsbildenden Art sind in den unterschiedlichsten Ausführungen seit Jahre aus der Praxis bekannt. Lediglich beispielhaft wird dazu auf die DE 43 39 071 A1 verwiesen. Bei dem dort bekannten Rotationsmikrotom ist wesentlich, dass das "Innenleben" des Mikrotoms in einem auf einer Grundplatte stehenden Gestell angeordnet ist, wobei es erforderlich ist, die dort insbesondere in Fig. 1 gezeigte Anordnung mit einem separaten Gehäuse zu umgeben. Jedenfalls umfasst das gattungsbildende Rotationsmikrotom ein Mikrometerwerk, eine dem Mikrometerwerk zugeordnete Objekthalteeinrichtung, einen Antrieb für das Mikrometerwerk zum vertikalen Bewegen der Objekthalteeinrichtung, ein Gestell zur Aufnahme des Mikrometerwerks und ggf. des Antriebs, ein Gehäuse und eine außerhalb des Gehäuses angeordnete Messerhalteeinrichtung für das zum Schneiden bestimmte Messer.

Das aus der DE 43 39 071 A1 bekannte Rotationsmikrotom ist insoweit problematisch, als es durch seine Ausgestaltung konstruktiv aufwendig ist und bedingt durch das Gestell und das mit Abstand um das Gestell herum angeordnete Gehäuse groß baut. Einerseits verursacht das bekannte Rotationsmikrotom erhebliche Kosten in der Herstellung und andererseits ist es aufgrund seiner Größe schwer zu handhaben.

Die DE 43 07 750 A1 beschreibt zudem ein Rotationsmikrotom mit einem Mikrometerwerk, einer dem Mikrometerwerk zugeordneten Objekthalteeinrichtung sowie einem Antrieb für das Mikrometerwerk zur vertikalen Bewegung der Objekthalteeinrichtung. Eine Zustelleinrichtung umfasst eine drehangetriebene Spindel, über die ein Zustellkolben, an dessen freiem Ende die Objekthalteeinrichtung angeordnet ist, innerhalb einer in einem Support-Block ausgebildeten Durchgangsöffnung horizontal verfahrbar ist. Im Konkreten gleitet der Zustellkolben durch die Durchgangsöffnung, wobei zwischen der Außenwand des Zustellkolbens und der Innenwandung der Durchgangsöffnung ein Gleitkontakt realisiert ist.

Des Weiteren ist aus der DE 202 02 043 U1 ein Schlittenmikrotom bekannt, welches ein ein Mikrometerwerk tragendes Gehäuse sowie eine relativ zu dem Gehäuse zur Zustellung und Schnittdickeneinstellung über das Mikrometerwerk verstellbare Objekthalteeinrichtung für einen Probenkörper umfasst. Zudem ist eine dem Gehäuse zugeordnete Führungseinrichtung für einen linear verfahrbaren Schlitten und eine vom Schlitten getragene Halteeinrichtung für ein Schneidmesser vorgesehen, welches beim Schneidvorgang relativ zum Probenkörper bewegbar ist. Das Mikrometerwerk umfasst ein die Objekthalteeinrichtung tragendes Stellorgan, welches über eine Kreuzrollenführung vertikal geführt und bewegbar ist.

Der vorliegenden Erfindung liegt nun die Aufgabe zugrunde, ein Rotationsmikrotom der gattungsbildenden Art derart auszugestalten und weiterzubilden, dass sich bei relativ einfachem Aufbau eine höchstmögliche Präzision der Objektzustellung und damit der Schnittqualität ergibt.

Das erfindungsgemäße Rotationsmikrotom löst die voranstehende Aufgabe durch die Merkmale des Patentanspruchs 1. Danach ist das gattungsbildende Rotationsmikrotom dadurch gekennzeichnet, dass der Zustellkolben gegenüber dem Rahmen mittels Kreuzrollenführung drehfest geführt ist, und dass die Spindel über eine Spindelmutter, eine zwischen der Spindelmutter und einer Innenwandung des Zustellkolbens wirkende Druckhülse sowie über Arretierungen zwischen der Spindelmutter und der Druckhülse mit dem Zustellkolben wirkverbunden ist.

Erfindungsgemäß ist erkannt worden, dass bei relativ einfachem Aufbau eine höchstmögliche Präzision der Objektzustellung durch eine drehfeste Führung des Zustellkolbens gegenüber dem Rahmen mittels Kreuzrollenführung erreicht werden kann. Wesentlich ist dabei, dass die Zustelleinrichtung insgesamt vertikal auf und ab bewegt wird, wobei je Bewegungsablauf automatisch ein Vorschub bewerkstelligt wird. Dazu umfasst die Zustelleinrichtung eine sich gegen einen Rahmen abstützende, drehangetriebene Spindel und einen über die Spindel horizontal verfahrbaren Zustellkolben, an dessen freiem Ende die Objekthalteeinrichtung angeordnet bzw. angelenkt ist. Im Konkreten erstreckt sich die den Vorschub bewerkstelligende Spindel antriebsseitig in den Zustellkolben hinein und ist über eine Spindelmutter, eine zwischen der Spindelmutter und einer Innenwandung des Zustellkolbens wirkende Druckhülse und über geeignete Arretierungen zwischen der Spindelmutter und der Druckhülse mit dem Zustellkolben wirkverbunden. Gemäß den voranstehenden Ausführungen wird deutlich, dass der Zustellkolben horizontal verfahren wird, um nämlich die Zustellung der Objekthalteeinrichtung zu realisieren. Dazu ist in erfindungsgemäßer Weise eine Linearführung des Zustellkolbens in Form einer Kreuzrollenführung vorgesehen. Der Zustellkolben ist dabei drehfest geführt.

Das eine umlaufende Wandung umfassende Gehäuse ist zur sicheren Kapselung des Mikrometerwerks mit einer integralen Stirnwand ausgestattet, wobei diese Stirnwand einen Durchgang für den Zustellkolben aufweist, der von innen durch die Stirnwand hindurch nach außen ragt und die Objekthalteeinrichtung trägt. Sofern das Gehäuse quaderähnlich oder würfelähnlich ausgebildet ist, umfasst es inklusive seiner Ober- und Unterseite fünf Wandungen, wobei die Stirnwand eine Öffnung für den Zustellkolben aufweist.

Die voranstehenden Ausführungen ergeben, dass der Zusammenbau des Rotationsmikrotoms von der Rückseite her zu erfolgen hat, da diese nämlich zum Einbau des Mikrometerwerks und des sonstigen Innenlebens des Mikrotoms zunächst offen ist. Die Rückseite wird mit einer Rückplatte geschlossen, die das monolithische Gehäuse zu einem geschlossenen Bauteil ergänzt.

Gemäß den voranstehenden Ausführungen ist es möglich, dass das die umlaufende Wandung bildende Gestell bzw. Gehäuse einteilig ausgeführt ist. Dabei könnte das durch das Gestell gebildete Gehäuse aus Metall, vorzugsweise aus Leichtmetall, insbesondere aus Aluminium oder einer Aluminiumlegierung, hergestellt sein. Durch spanenden Bearbeitung könnte das Gehäuse aus dem Vollen gearbeitet werden. Eine gusstechnische Herstellung ist ebenfalls denkbar, wobei dazu besondere Werkzeuge erforderlich sind.

An dieser Stelle sei noch einmal ganz besonders darauf hingewiesen, dass in erfindungsgemäßer Weise das ohnehin vorhandene Gestell zur Aufnahme des Mikrometerwerks eine weitere Funktion erhält, nämlich die Funktion eines monolithischen Gehäuses, welches eine weitgehend geschlossene, homogene Einheit darstellt. Die zur Montage des Mikrotoms offene Rückseite wird durch eine separate Rückplatte geschlossen, die in vorteilhafter Weise aus dem gleichen Material wie das monolithische Gehäuse hergestellt ist. Im montierten Zustand bildet das Gestell gemeinsam mit der Rückplatte eine als Gehäuse zu verstehende Einheit, die insgesamt das Innenleben des Mikrotoms umschließt.

Der auf der Vorderseite in der integralen Stirnwand vorgesehene Durchgang ist zur Realisierung einer vertikalen Bewegung des durch den Durchgang hindurch ragenden Zustellkolbens länglich ausgebildet und erstreckt sich im Wesentlichen vertikal über die Stirnwand hinweg. Der Durchgang ist dabei so bemessen, dass der Zustellkolben durch die Stirnwand hindurch passt, wobei dort eine geeignete Führung vorgesehen ist.

Zum besseren Abschluss der Vorderseite des Mikrotoms, insbesondere aber zur Abdeckung der Führung für den Zustellkolben bzw. für die den Zustellkolben umfassende Zustelleinrichtung, ist in weiter vorteilhafter Weise eine Frontplatte vorgesehen, die die integrale Stirnwand zumindest teilweise überdeckt und einen entsprechenden Durchgang für den Zustellkolben aufweist, der gerade so bemessen ist, dass der Zustellkolben durch diesen Durchgang hindurch nach außerhalb des Gehäuses ragt. Auch die Frontplatte ist in vorteilhafter Weise aus dem gleichen Material wie das sonstige Gehäuse gefertigt.

Nun ist es möglich, der Frontplatte weitere Ausnehmungen für von außerhalb des Gehäuses bedienbare, mit dem Mikrometerwerk wirkverbundene Betätigungsorgane zuzuordnen. So ist es beispielsweise möglich, der Frontplatte ein Zählwerk für die getätigten Hübe des Mikrometerwerks zuzuordnen. In unmittelbarer Nähe des Zählwerks könnte ein Reset-Schalter bzw. Taster vorgesehen sein, der mechanisch oder als Piezotaster ausgeführt sein kann. Des Weiteren könnte die Frontplatte ein Betätigungsorgan zum Einstellen der Schnittdicke sowie ein Betätigungsorgan zur Einstellung der Trimmung aufweisen, wobei diese Betätigungsorgane ohne weiteres auch seitlich im Gehäuse angeordnet sein könnten.

Im Lichte einer einfachen Handhabung ist in der umlaufenden Wandung des Gehäuses, nämlich in einer der Seitenwandungen, ein Durchgang für ein Betätigungsorgan des Mikrometerwerks ausgebildet. Im Konkreten kann es sich dabei um ein Handrad handeln, welches unmittelbar oder mittelbar auf das Mikrometerwerk wirkt, wobei das Mikrometerwerk die Drehbewegung des Handrads in eine lineare Bewegung der die Objekthalteeinrichtung tragenden Zustelleinrichtung wandelt. Jedenfalls ist das Mikrometerwerk in bekannter Weise so ausgelegt, dass die Drehbewegung des Handrads oder aber auch eines Elektromotors in eine lineare Bewegung, d.h. im Konkreten in eine Auf- und Abbewegung der Objekthalteeinrichtung, umgeformt wird.

In der umlaufenden Wandung des Gehäuses ist ein weiterer Durchgang vorgesehen, nämlich ein Durchgang für ein Betätigungsorgan des Grobtriebs. Auch hier kann im Konkreten ein Handrad als Betätigungsorgan vorgesehen sein. Der Grobtrieb dient der schnellen Zustellung der Objekthalteeinrichtung in die unmittelbare Nähe des zum Schneiden dienenden Messers, sodass nach grober Zustellung über den Feintrieb weiter zugestellt und dann scheibchenweise geschnitten werden kann.

Bereits zuvor ist erwähnt worden, dass die Objekthalteeinrichtung durch den Zustellkolben einer Zustelleinrichtung getragen wird. Diese Zustelleinrichtung wird insgesamt über das Mikrometerwerk vertikal auf und ab bewegt, wobei der Zustellkolben der Zustelleinrichtung von innerhalb des Gehäuses durch den in der Stirnwand bzw. der Stirnplatte des Gehäuses vorgesehenen Durchgang nach außen ragt, sodass die Objekthalteeinrichtung mit dem zu schneidenden Objekt bestückt werden kann. Dies erfolgt beispielsweise mittels einer herkömmlichen Objektklammer zur Aufnahme des zu schneidenden Objekts.

Die Spindel selbst kann über eine Zahnriemenscheibe drehangetrieben sein. In vorteilhafter Weise ist zwischen dem Antrieb und der Spindel eine Friktionsscheibe vorgesehen, sodass beim Blockieren der Spindel zwangsweise eine Entkopplung stattfindet, sodass eine Beschädigung des Antriebs und/oder der Spindel wirksam vermieden ist.

Im Konkreten könnte der Zustellkolben mittels zweier einander gegenüberliegender Kreuzrollenführungen geführt sein, wobei hier in weiter vorteilhafter Weise eine Zwangsführung vorgesehen ist.

Neben der horizontalen Führung des Zustellkolbens innerhalb der Zustelleinrichtung findet im Gehäuse eine weitere zunächst lineare Bewegung statt, nämlich die Auf- und Abbewegung der die Objekthalteeinrichtung tragenden Zustelleinrichtung. Zur Realisierung dieser Bewegung weist der Rahmen der Zustelleinrichtung einen innerhalb des Gehäuses an der Gehäuseinnenwandung vertikal geführten Führungsbereich auf, der gegenüber der Innenwandung des Gehäuses linear geführt ist. Auch dieser Führungsbereich kann - wie im Falle der horizontalen Führung des Zustellkolbens - mittels Linearführung gegenüber der Gehäuseinnenwandung geführt sein, so auch hier vorzugsweise mittels Wälzlager- bzw. Kreuzrollenführung. Im Gegensatz zu der Führung des Zustellkolbens ist hier jedoch eine vertikale Führung realisiert. Diese vertikale Linearführung könnte in weiter vorteilhafter Weise dadurch realisiert sein, dass beidseits der sich vertikal erstreckenden Ausnehmung für den Zustellkolben in der Stirnwand eine Kreuzrollenführung vorgesehen ist, sodass der Führungsbereich des Rahmens zwischen den Kreuzrollenführungen auf- und abbewegbar ist.

Die hier insgesamt verwendeten Kreuzrollenführungen könnten mit einer Zwangszentrierung ausgestattet sein. Im Konkreten könnten die Kreuzrollenführungen einen Kreuzrollenkäfig und den jeweiligen Führungsleisten zugeordnete Zwangsführungselemente aufweisen, wobei diese wiederum eine Zahnschiene und ein Zahnrad oder mehrere Zahnräder umfassen könnten. Eine exakte Führung sowohl des Zustellkolbens als auch des Führungsbereichs der Antriebseinrichtung ist dabei gewährleistet.

Wie bereits zuvor erwähnt, erstreckt sich der Führungsbereich des Rahmens der Zustelleinrichtung unmittelbar hinter dem Durchgang oder innerhalb des Durchgangs in der Stirnwand. Je nachdem, in welcher Position sich der durch Ausnehmung der Stirnwand hindurch erstreckende Zustellkolben befindet, entsteht eine Öffnung innerhalb des Gehäuses, die es zur Vermeidung von Verschmutzungen, aber auch zur Vermeidung von Verletzungen der Bedienperson, zu schließen gilt. Dazu ist ein besonderes Abdeckband vorgesehen, welches von dem Führungsbereich des Rahmens mitgenommen wird. Im Konkreten kann im oberen Teil der umlaufenden Wandung des Gehäuses ein sich von der Rückseite bis zur Vorderseite des Gehäuses erstreckender flacher Durchgang ausgebildet sein, durch den sich eine mit dem Rahmen der Zustelleinrichtung verbundene bandartige Abdeckung für den sonst offenen Bereich des Durchgangs des Zustellkolbens erstreckt. Diese Abdeckung ist auf der Rückseite des Gehäuses elastisch an dieses angelenkt, so dass bei einer Abwärtsbewegung des Zustellkolbens die Abdeckung zumindest teilweise aus dem flachen Durchgang herausgezogen und zu dem zumindest teilweise geöffneten Durchgang in der Stirnwand umgelenkt wird. Der untere Teil des Rahmens bzw. des Führungsbereichs des Rahmens ist in weiter vorteilhafter Weise derart dimensioniert, dass er auch in der obersten Position des Zustellkolbens den Durchgang in der Stirnwand bzw. in der Frontplatte abdeckt, sodass von unten keine besonderen Abdeckmaßnahmen erforderlich sind.

Aus der voranstehend beschriebenen Konstruktion ergibt sich zwangsweise, dass das durch die Objekthalteeinrichtung gehaltene Objekt an dem davor angeordneten Messer vertikal vorbeigeführt wird, sodass ein Schnitt entsteht. Würde das Objekt in der gleichen Schnittebene nach oben zurückgezogen werden, so würde es - zwangsweise - das Messer von der Rückseite her berühren. Dies würde die Schnittqualität insbesondere bei sehr feinen Schnitten negativ beeinträchtigen. Um dies zu vermeiden, ist eine ganz besondere Rückzugsautomatik vorgesehen, die als solche aus dem Stand der Technik bereits bekannt ist. Die Rückzugsautomatik wirkt hubweise auf die gesamte Zustelleinrichtung, indem ein Rückzugsmechanismus die für die Zustellbewegung des Zustellkolbens verantwortliche Spindel gegen die Kraft eines Federpakets entgegen der Zustellrichtung drückt. Dabei könnte das Federpaket zwischen einer Schulter der Spindel und einem hinteren Teil des Rahmens der Zustelleinrichtung angeordnet sein, sodass sich die Spindel insgesamt in ihre der Zustellrichtung entgegengesetzte Richtung drücken lässt. Dadurch wird die Objekthalteeinrichtung und somit das Objekt von dem fest angeordneten Messer entfernt, und zwar jeweils bei der Rückzugsbewegung, während der nicht geschnitten wird.

Im Konkreten umfasst der Rückzugsmechanismus ein durch den Hub des Mikrometerwerks betätigtes Stellorgan, welches unmittelbar oder mittelbar auf die Spindel entgegen deren Vorschubrichtung wirkt. Dabei könnte das Stellorgan die Spindel um etwa 0,05 mm je Hub des Mikrometerwerks zurückziehen.

Zur Realisierung der hier erforderlichen Rückzugsbewegung könnte das Stellorgan über einen die Spindel umgebenden Stellring in etwa orthogonal auf die Spindel wirken und diese dabei axial entgegen ihrer Vorschubrichtung weg- bzw. zurückdrücken. Zur Vermeidung eines Kippfehlers, insbesondere zur Realisierung eines axialen Zurückdrückens der Spindel, könnte der Stellring einen äußeren und einen inneren Ring umfassen, wobei das Stellorgan über eine Welle auf den äußeren Stellring greift und der innere Stellring mit der Spindel wirkverbunden ist. Beide Ringe könnten dabei in zumindest geringem Maße schwenkbar miteinander verbunden sein, sodass sich ein Kippfehler zur Realisierung eines axialen Wegdrückens der Spindel wirksam vermeiden lässt.

Bereits zuvor ist erwähnt worden, dass zur schnellen Zustellung der Objekthalteeinrichtung ein Grobtrieb vorgesehen ist. Dieser Grobtrieb ist vorzugsweise über ein Handrad von außerhalb des Gehäuses betätigbar und dient zur Zustellung der Objekthalteeinrichtung bis unmittelbar vor das Messer. Danach erfolgt die automatische Feinzustellung.

Zur Realisierung des Grobtriebs überträgt dieser die Drehbewegung einer mit dem Handrad fest verbundenen Welle über eine Rutschkupplung und vorzugsweise über ein Gelenk auf die Spindel. Die Vorkehrung einer Rutschkupplung vermeidet eine Zerstörung beim Blockieren. Die Rutschkupplung könnte zwei durch Federdruck gegeneinander gepresste Scheiben umfassen, die bei Überschreiten eines vorgegebenen Widerstands gegeneinander durchrutschen, sodass hier eine gewisse Sicherheit zur Vermeidung von Beschädigungen realisiert ist.

Nun wäre es grundsätzlich denkbar, das Gehäuse des Mikrotoms unabhängig von der Messerhalteeinrichtung und dem dort gehaltenen Messer zu positionieren, wobei zumindest im Betrieb eine feste Zuordnung beider Funktionsgruppen erforderlich ist. In vorteilhafter Weise findet jedoch bereits bauseits diese Zuordnung dadurch statt, dass das Gehäuse des Mikrotoms insgesamt auf einer Bodenplatte sitzt, die zur Aufnahme der Messerhalteeinrichtung von dem Gehäuse abragt. Ebenso ist es jedoch auch denkbar, dass auf der Seite der Objekthalteeinrichtung eine Bodenplatte als integraler Bestandteil oder aber auch lösbar daran festgelegt abragt, wobei die Messerhalteeinrichtung auf der Bodenplatte sitzt. Die Bodenplatte könnte wiederum eine vorzugsweise orthogonal zu der Frontplatte verlaufende Führungseinrichtung umfassen, entlang der die Messerhalteeinrichtung und somit das Messer verschiebbar ist. Des Weiteren könnte für die Messerhalteeinrichtung ein Klemmmechanismus vorgesehen sein, sodass sich die Messerhalteeinrichtung entlang der Führungseinrichtung in beliebigen Positionen festlegen bzw. festklemmen lässt. Zur Betätigung könnte ein entsprechender Klemmhebel dienen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In der Zeichnung zeigt
- Fig. 1: in einer perspektivischen Ansicht ein Ausführungsbeispiel eines erfin- dungsgemäßen Rotationsmikrotoms mit angeflanschter Messerhalte- einrichtung,
- Fig. 2: in einer perspektivischen Ansicht den Gegenstand aus Fig. 1, jedoch ohne Frontplatte,
- Fig. 3: in einer perspektivischen Rückansicht den Gegenstand aus Fig. 1 bei entfernter Rückplatte,
- Fig. 4: in einer perspektivischen Ansicht das Gehäuse des Gegenstands aus den Fig. 1 bis 3,
- Fig. 5: in einer schematischen Seitenansicht, vergrößert und teilweise ge- schnitten, ein Ausführungsbeispiel einer Zustelleinrichtung des erfin- dungsgemäßen Mikrotoms,
- Fig. 6: in schematischen Ansichten, teilweise geschnitten, Bestandteile der auf die Spindel der Zustelleinrichtung wirkenden Rückzugsautomatik und
- Fig. 7: in einer schematischen Seitenansicht, vergrößert und teilweise ge- schnitten, den auf die Spindel der Zustelleinrichtung wirkenden und mittels Handrad betätigbaren Grobtrieb.

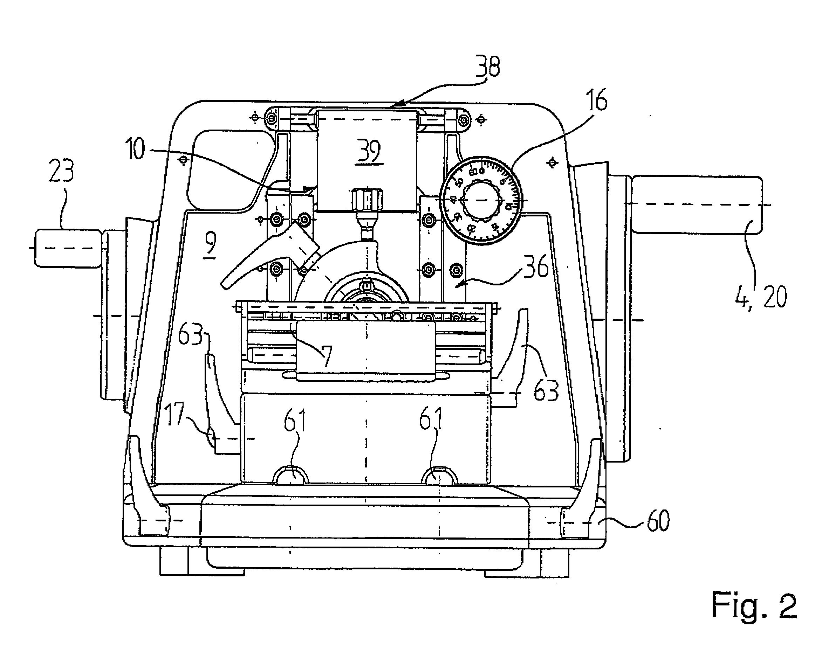

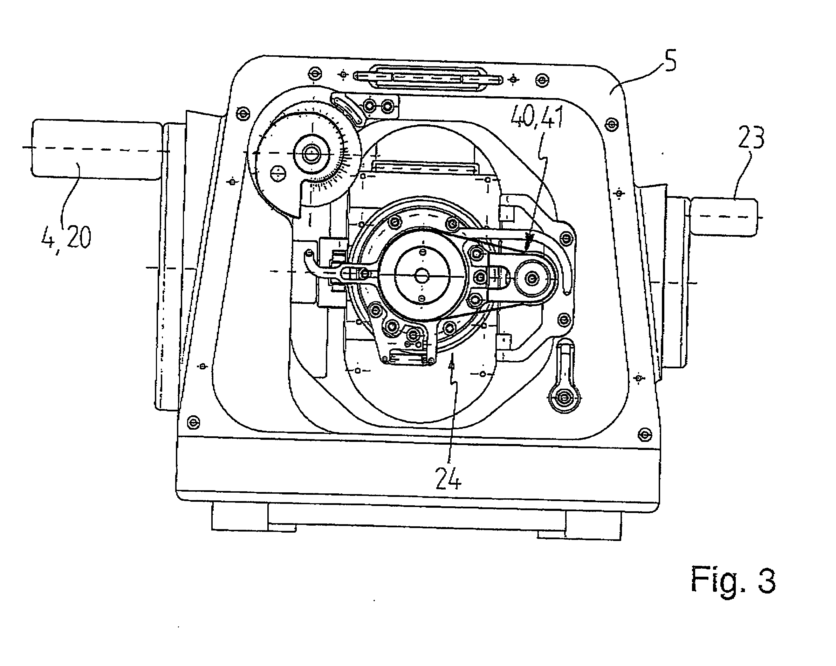

Die Fig. 1 bis 3 zeigen ein konkretes Ausführungsbeispiel eines erfindungsgemäßen Rotationsmikrotoms jeweils in perspektivischen Ansichten, und zwar gemäß den Fig. 1 und 2 jeweils in einer Frontansicht und gemäß Fig. 3 in einer Rückansicht, wobei bei den Fig. 2 und 3 die Frontplatte bzw. die Rückplatte entfernt ist.

Das in den Fig. gezeigte Rotationsmikrotom umfasst ein Mikrometerwerk 1 und eine dem Mikrometerwerk 1 zugeordnete Objekthalteeinrichtung. Des Weiteren ist ein Antrieb für das Mikrometerwerk 1 vorgesehen, nämlich zum vertikalen Bewegen der Objekthalteeinrichtung. Dazu dient im Konkreten ein Handrad 4.

Des Weiteren umfasst das Rotationsmikrotom ein Gestell zur Aufnahme des Mikrometerwerks 1 und ggf. des Antriebs, wobei hierunter eine handbetriebene Mechanik oder ein elektrischer Antrieb zu verstehen ist. Des Weiteren umfasst das Rotationsmikrotom ein Gehäuse 5 sowie eine Messerhaiteeinrichtung 6, die außerhalb des Gehäuses 5 angeordnet ist, und die ein Messer 7 trägt. Wird das Mikrometerwerk 1 mittels dem Handrad 4 betätigt, bewegt sich die Objekthalteeinrichtung auf und ab, sodass bei geeigneter Zustellung des in den Figuren nicht gezeigten Objekts gegenüber dem Messer 7 ein Schnitt am Objekt stattfindet.

Die Fig. 1 bis 4 zeigen gemeinsam, dass das Gestell bzw. das Gehäuse 5 eine umlaufende Wandung 8 umfasst, wobei das Gestell ein monolithisches Gehäuse 5 bildet.

Die Fig. 1, 2 und 4 zeigen gemeinsam, dass das Gehäuse 5 neben der umlaufenden Wandung 8 eine integrale Stirnwand 9 mit einem Durchgang 10 für einen Zustellkolben 11 umfasst, wobei der Zustellkolben 11 die Objekthalteeinrichtung trägt.

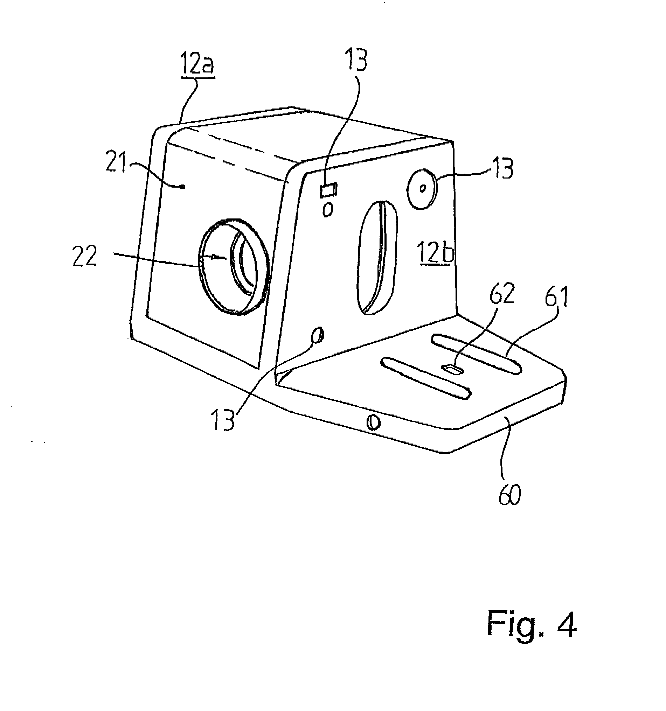

Fig. 4 zeigt besonders deutlich, dass das die umlaufende Wandung 8 bildende Gestell bzw. Gehäuse 5 einteilig ausgeführt ist. Dabei ist das Gehäuse 5 aus Aluminium gefertigt und zwar durch spanende Bearbeitung aus dem Vollen gearbeitet.

Fig. 3 zeigt das Gehäuse 5 in einer Rückansicht, wobei die im Gehäuse 5 vorgesehene Öffnung das Mikrometerwerk 1 sowie das sonstige Innenleben des Mikrotoms erkennen lässt. Bei der in Fig. 4 gewählten Darstellung des Gehäuses 5 ist auf der Rückseite eine Rückplatte 12a eingesetzt, so dass dort das Gehäuse 5 geschlossen ist. Des Weiteren ist in Fig. 4 erkennbar, dass die integrale Stirnwand 9 durch eine Frontplatte 12b abgedeckt ist.

Der Durchgang 10 zur vertikalen Bewegung des durch diesen hindurch ragenden Zustellkolbens 11 erstreckt sich im Wesentlichen über die Stirnwand 9 bzw. Frontplatte 12b hinweg, wobei der Durchgang 10 in der Frontplatte 12b gerade so bemessen ist, dass der Zustellkolben 11 zur vertikalen Bewegung hindurch passt.

Die Fig. 1 und 4 zeigen des Weiteren, dass die Frontplatte 12b weitere Ausnehmungen 13 für von außerhalb des Gehäuses 5 bedienbare, mit dem Mikrometerwerk 1 wirkverbundene Betätigungsorgane aufweist, wobei es sich dabei im Konkreten um ein Zählwerk 14 für die Anzahl der Hübe des Mikrometerwerks 1, um einen Reset-Schalter 15 für das Zählwerk 14 sowie um ein Einstellrad 16 für die Schnittdicke handelt. Eine weitere Ausnehmung 13 dient zur Aufnahme eines Trimmhebels 17.

Die Fig. 1 bis 4 zeigen des Weiteren, dass in der umlaufenden Wandung 8 des Gehäuses 5, in einer der Seitenwandungen 18, ein Durchgang 19 für ein Betätigungsorgan des Mikrometerwerks 1 ausgebildet ist, wobei es sich bei dem Betätigungsorgan um ein Handrad 20 handelt. Mit diesem Handrad 20 wird das Mikrometerwerk 1 betätigt, wobei dadurch wiederum die Zustelleinrichtung bzw. der Zustellkolben 11 vertikal - Hub für Hub - bewegt wird.

Des Weiteren ist auf der gegenüberliegenden Seitenwandung 21 ein weiterer Durchgang 22 für ein Betätigungsorgan des Grobtriebs vorgesehen, wobei auch dort das Betätigungsorgan als Handrad 23 ausgeführt ist. Bei dem in Fig. 1 gezeigten Ausführungsbeispiel eines erfindungsgemäßen Rotationsmikrotoms dient das Handrad 20 auf der rechten Seite des Gehäuses 5 der Betätigung des Mikrometerwerks 1 und dient das Handrad 23 auf der linken Seite des Gehäuses 5 der Betätigung des Grobtriebs, wodurch eine schnelle Zustellung des Zustellkolbens 11 bzw. der Objekthalteeinrichtung erfolgt.

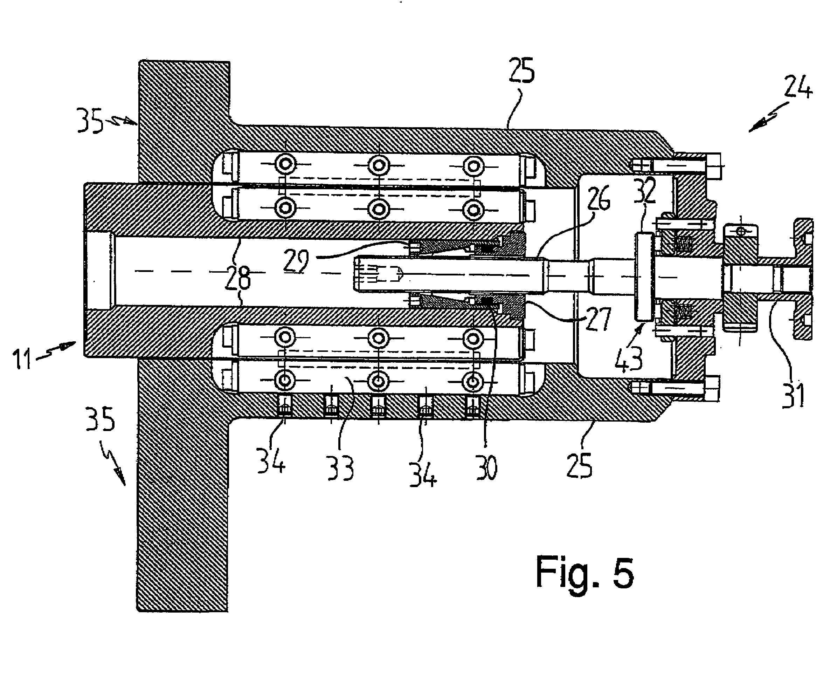

Fig. 3 zeigt das Gehäuse 5 im geöffneten Zustand, d.h. ohne Rückplatte 12a. Im Gehäuse 5 ist das Mikrometerwerk 1 angeordnet. Des Weiteren ist die Zustelleinrichtung 24 erkennbar. Diese Zustelleinrichtung 24 ist nochmals im Detail in Fig. 5 dargestellt. Auf diese Figur wird nachfolgend Bezug genommen.

Wie bereits zuvor erwähnt, umfasst das Mikrometerwerk 1 eine die Objekthalteeinrichtung tragende Zustelleinrichtung 24, die über das Mikrometerwerk 1 vertikal auf und ab bewegt wird. Diese Zustelleinrichtung 24 ist in Fig. 5 für sich gesehen dargestellt.

Als wesentliches Bauteil umfasst die Zustelleinrichtung 24 eine sich gegen einen Rahmen 25 abstützende, drehangetriebene Spindel 26. Des Weiteren umfasst die Zustelleinrichtung 24 den über die Spindel 26 horizontal verfahrbaren Zustellkolben 11, an dessen freiem Ende die Objekthalteeinrichtung angelenkt ist.

Fig. 5 lässt des Weiteren erkennen, dass sich die Spindel 26 antriebsseitig in den Zustellkolben 11 hinein erstreckt und über eine Spindelmutter 27, eine zwischen der Spindelmutter 27 und einer Innenwandung 28 des Zustellkolbens 11 wirkende Druckhülse 29 und über Arretierungen 30 zwischen der Spindelmutter 27 und der Druckhülse 29 mit dem Zustellkolben 11 wirkverbunden ist. An dieser Stelle sei angemerkt, dass es beim Zusammenspiel zwischen der Spindel 26 und der Spindelmutter 27 darum geht, den Zustellkolben 11 drehfest horizontal zu bewegen, wobei durch die Druckhülse 29 eine Verklemmung zwischen der Innenwandung 28 des Zustellkolbens 11 und der Spindelmutter 27 realisiert ist.

Die Spindel 26 lässt sich beliebig antreiben, wobei bei dem hier gewählten Ausführungsbeispiel der Antrieb über eine Zahnriemenscheibe 31 erfolgt. Zwischen dem Antrieb bzw. der Zahnriemenscheibe 31 und der Spindel 26 wirkt eine Friktionsscheibe 32, um bei hinreichend großem Widerstand eine Zwangsentkopplung zur Vermeidung von Beschädigungen zu bewirken.

Des Weiteren ist wesentlich und von besonderer Bedeutung, dass der Zustellkolben 11 gegenüber dem Rahmen 25 mittels Linearführung drehfest geführt ist. Im Konkreten ist hier eine Kreuzrollenführung 33 vorgesehen. Aus Symmetriegründen ist der Zustellkolben 11 mittels zweier einander gegenüberliegender Kreuzrollenführungen 33 zwangsgeführt. Zum Justieren der Kreuzrollenführungen 33, insbesondere aber auch zum Erzeugen einer hinreichenden Vorspannung, sind Justier/Spannschrauben vorgesehen.

Die Zustelleinrichtung 24 wird innerhalb des Gehäuses 5 insgesamt vertikal geführt, nämlich zur Definition der Schnittbewegung der Objekthalteeinrichtung. Dazu weist der Rahmen 25 einen innerhalb des Gehäuses 5 an der Gehäuseinnenwandung vertikal geführten Führungsbereich 35 auf. Der Führungsbereich 35 des Rahmens 25 ist gegenüber der Gehäuseinnenwandung mittels Linearführung geführt, wobei es sich auch hier um eine Kreuzrollenführung 36 handelt. Die vertikale Führung der Zustelleinrichtung 24 und die dortige Vorkehrung einer Kreuzrollenführung 36 lässt sich der Darstellung in Fig. 2 entnehmen, da dort nämlich bei entfernter Frontplatte 12b die einzelnen Führungselemente bzw. Führungsleisten 37 ohne weiteres erkennbar sind. Jedenfalls ist dort beidseits der sich vertikal erstreckenden Ausnehmung bzw. des dort ausgebildeten Durchgangs 10 für den Zustellkolben 11 jeweils eine Kreuzrollenführung 36 angeordnet.

Die hier verwendeten Kreuzrollenführungen 33, 36 sind mit einer Zwangszentrierung ausgestattet. Darüber hinaus umfassen die Kreuzrollenführungen 33, 36 Kreuzrollenkäfige und den Führungsleisten 37 zugeordnete Zwangsführungselemente, wobei es sich dabei um Zahnschienen und Zahnräder handeln kann. Die Zahnschiene kann aus Kunststoff gefertigt sein.

Die Fig. 2 und 3 zeigen gemeinsam, dass im oberen Teil des Gehäuses 5 bzw. der umlaufenden Wandung 8 des Gehäuses 5 ein sich von der Rückseite bis zur Vorderseite des Gehäuses 5 erstreckender flacher Durchgang 38 ausgebildet ist, durch den sich eine mit dem Rahmen 25 der Zustelleinrichtung 24 verbundene bandartige Abdeckung 39 für den Durchgang 10 des Zustellkolbens 11 erstreckt. In Fig. 3 ist angedeutet, dass die Abdeckung 39 auf der Rückseite des Gehäuses 5 elastisch angelenkt ist, so beispielsweise über eine Feder, ein Gummi oder dergleichen.

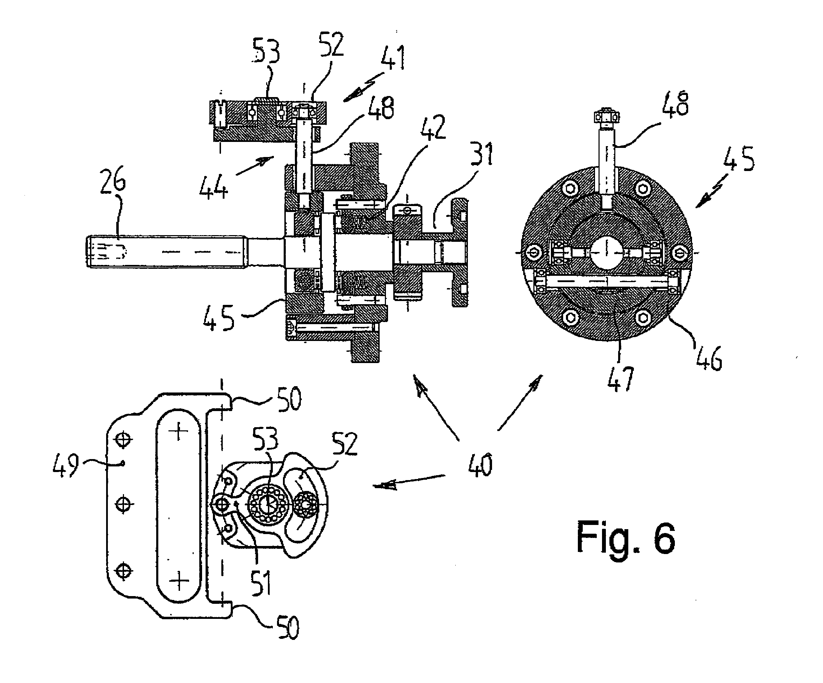

Eine weitere wesentliche Baugruppe des erfindungsgemäßen Rotationsmikrotoms ist eine ganz besondere Rückzugsautomatik 40, deren einzelne Bestandteile sowie deren Zusammenwirken mit der Zustelleinrichtung 24 den drei Abbildungen aus Fig. 6 entnehmbar ist. In Bezug auf die Rückzugsautomatik 40 ist auf die Fig. 3, 5 und 6 zu verweisen, die gemeinsam den Aufbau der Rückzugsautomatik 40 und deren Funktionsweise erkennen lassen. So wirkt die Rückzugsautomatik 40 hubweise auf die gesamte Zustelleinrichtung 24, indem ein Rückzugsmechanismus 41 die Spindel 26 gegen die Kraft eines Federpakets 42 entgegen der Zustellrichtung drückt. Im Konkreten ist das Federpaket 42 zwischen einer Schulter 43, der Spindel 26 und dem Rahmen 25 der Zustelleinrichtung 24 angeordnet.

Der Rückzugmechanismus 41 umfasst des Weiteren ein durch den Hub des Mikrometerwerks 1 betätigtes Stellorgan 44, welches unmittelbar auf die Spindel 26 entgegen deren Vorschubrichtung wirkt. Das Stellorgan 44 ist in der Lage, die Spindel 26 um etwa 0,05 mm je Hub des Mikrometerwerks 1 zurückzuziehen. Dabei wirkt das Stellorgan 44 über einen die Spindel 26 umgebenden Stellring 45 in etwa orthogonal auf die Spindel 26, wodurch sich diese axial entgegen der Vorschubrichtung durch Einwirken des Stellorgans 44 wegdrücken lässt. Der Stellring 45 weist wiederum einen äußeren und einen inneren Ring 46, 47 auf, wobei das Stellorgan 44 über eine Welle 48 auf den äußeren Ring 46 greift und der innere Ring 47 mit der Spindel 26 wirkverbunden ist. Die beiden Ringe 46, 47 sind zum Ausgleich eines Kippfehlers schwenkbar miteinander verbunden.

In Bezug auf Fig. 6 sei angemerkt, dass die Rückzugsautomatik 40 einen automatischen Rückzug der Spindel 26 und somit des Zustellkolbens 11 bewirkt. Dazu sei insbesondere auf die Darstellung unten links in Fig. 6 verwiesen, wonach nämlich ein Bügel 49 fest mit dem Gehäuse 5 verbunden ist. Dort vorgesehene Mitnehmer 50 betätigen beim Hub der Zustelleinrichtung 24 ein schwenkbares Stellglied 51, mit dem die Welle 48 geführt bzw. verschoben wird. Eine Verschiebung der Welle 48 wird dadurch hervorgerufen, dass eine Ausnehmung 52 zur Führung der Welle 48 nicht zentrisch zum Lagerpunkt 53 des Stellglieds 51 ausgebildet ist. Folglich wird beim Anschlagen bzw. Anstoßen des Mitnehmers 50 an den jeweiligen Bügeln 49 das Stellglied 51 um seinen Lagerpunkt 53 geschwenkt und aufgrund der Exzentrizität wird dabei die in der Ausnehmung 52 geführte Welle 48 zum Rückzug der Spindel 26 gegen die Kraft des Federpakets 42 gedrückt. Das Zusammenwirken der Welle 48 mit der Spindel 26 lässt sich der Darstellung oben links in Fig. 6 entnehmen. Oben rechts in Fig. 6 ist die Kopplung der Welle 48 mit dem Stellring 45 dargestellt, wobei diese Darstellung gegenüber der Darstellung oben links um 90 Grad gedreht ist.

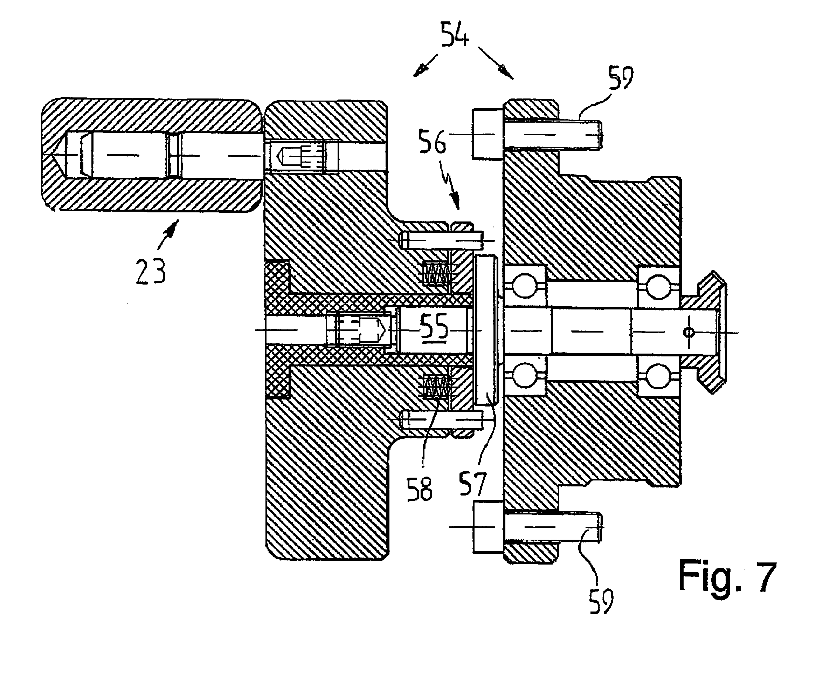

Zur schnellen Zustellung der Objekthalteeinrichtung ist ein von außerhalb des Gehäuses 5 über ein Handrad 23 betätigbarer, auf die Spindel 26 wirkender Grobtrieb 54 vorgesehen. Dieser Grobtrieb 54 ist in Fig. 7 dargestellt. Dabei wird die Drehbewegung einer mit dem Handrad 23 fest verbundenen Welle 55 über eine Rutschkupplung 56 und über ein in den Figuren nicht gezeigtes Gelenk auf die Spindel 26 übertragen. Eine schnelle Zustellung der Objekthalteeinrichtung bzw. des Objekts relativ zur Messerhalteeinrichtung 6 bzw. zum Messer 7 ist dadurch realisiert.

Die Rutschkupplung 56 umfasst zwei durch Federdruck gegeneinander gepresste Scheiben 57, die bei Überschreiten eines vorgegebenen Widerstands gegeneinander durchrutschen. Eine Zerstörung des Grobtriebs 54 aufgrund eines Blockierens der Spindel 26 oder umgekehrt ist dadurch wirksam vermieden.

In Fig. 7 ist des Weiteren angedeutet, dass der Federdruck innerhalb der Rutschkupplung 56 durch ein Federpaket 58 realisiert ist. Des Weiteren lässt Fig. 7 erkennen, inwieweit das Betätigungsorgan des Grobtriebs 54 am Gehäuse 5 festgeschraubt wird, nämlich durch dort vorgesehene Schrauben 59. Über eine sich rechts außen anschließende, in Fig. 7 nicht gezeigte Gelenkwelle wird die Drehbewegung des Grobtriebs 54 auf die Spindel 26 übertragen.

Schließlich zeigen die Fig. 1, 2 und 4, dass das Gehäuse 5 insgesamt auf einer Bodenplatte 60 sitzt. Diese Bodenplatte 60 dient zur Aufnahme der Messerhalteeinrichtung 6 mit dem Messer 7. Die Bodenplatte 60 umfasst eine orthogonal zu der Frontplatte 12 verlaufende Führungseinrichtung 61, entlang der die Messerhalteeinrichtung 6 verschiebbar ist. In Fig. 4 ist des Weiteren angedeutet, dass eine Aufnahme 62 für eine entsprechende Verankerung der Messerhalteeinrichtung 6 vorgesehen ist. Durch einen in die Bodenplatte 60 quer einführbaren Stift lässt sich die Messerhalteeinrichtung 6 arretieren und verspannen, wobei dazu ein besonderer Spannhebel 63 gemäß der Darstellung in den Fig. 1 und 2 vorgesehen ist. Abschließend sei hervorgehoben, dass das voranstehend beschriebene Ausführungsbeispiel die beanspruchte Lehre erörtert, diese jedoch nicht auf das Ausführungsbeispiel einschränkt.

## Patentansprüche

1. Rotationsmikrotom, mit einem Mikrometerwerk (1), einer dem Mikrometerwerk (1) zugeordneten Objekthalteeinrichtung, einem Antrieb für das Mikrometerwerk (1) zum vertikalen Bewegen der Objekthalteeinrichtung, einem Gestell zur Aufnahme des Mikrometerwerks und ggf. des Antriebs, wobei das Gestell eine umlaufende Wandung umfasst und dabei ein monolithisches Gehäuse bildet (5), einer gegenüber der Objekthalteeinrichtung außerhalb des Gehäuses (5) angeordneten, ein Messer (7) tragenden Messerhalteeinrichtung (6), wobei das Mikrometerwerk (1) eine die Objekthalteeinrichtung tragende Zustelleinrichtung (24) vertikal auf und ab bewegt, wobei die Zustelleinrichtung (24) eine drehangetriebene Spindel (26) und einen über die Spindel (26) horizontal verfahrbaren Zustellkolben (11) umfasst, an dessen freiem Ende die Objekthalteeinrichtung angelenkt ist, und wobei sich die Spindel (26) antriebsseitig in den Zustellkolben (11) hinein erstreckt und sich gegen einen Rahmen (25) abstützt,
**dadurch gekennzeichnet, dass** der Zustellkolben (11) gegenüber dem Rahmen (25) mittels Kreuzrollenführung (33) drehfest geführt ist, und dass die Spindel (26) über eine Spindelmutter (27), eine zwischen der Spindelmutter (27) und einer Innenwandung (28) des Zustellkolbens (11) wirkende Druckhülse (29) sowie über Arretierungen (30) zwischen der Spindelmutter (27) und der Druckhülse (29) mit dem Zustellkolben (11) wirkverbunden ist.

2. Rotationsmikrotom nach Anspruch 1, **dadurch gekennzeichnet, dass** das Gehäuse (5) neben der umlaufenden Wandung (8) eine integrale Stirnwand (9) mit einem Durchgang (10) für einen Zustellkolben (11) mit einer Objekthalteeinrichtung umfasst
und/oder dass das die umlaufende Wandung (8) bildende Gestell bzw. Gehäuse (5) einteilig ausgeführt ist,
wobei das Gehäuse (5) aus Metall, vorzugsweise aus Leichtmetall, insbesondere aus Aluminium oder einer Aluminiumlegierung, hergestellt sein kann.

3. Rotationsmikrotom nach Anspruch 1 oder 2, **dadurch gekennzeichnet, dass** das Gehäuse (5) um eine Rückplatte (12a) ergänzt ist.

4. Rotationsmikrotom nach Anspruch 2 oder 3, **dadurch gekennzeichnet, dass** sich der Durchgang (10) zur vertikalen Bewegung des durch diesen hindurch ragenden Zustellkolbens (11) im Wesentlichen vertikal über die Stirnwand (9) hinweg erstreckt.

5. Rotationsmikrotom nach einem der Ansprüche 2 bis 4, **dadurch gekennzeichnet, dass** das Gehäuse (5) um eine die integrale Stirnwand (9) abdeckende Frontplatte (12b) mit entsprechendem Durchgang (10) für den Zustellkolben (11) ergänzt ist
und/oder dass die Frontplatte (12b) weitere Ausnehmungen (13) für von außerhalb des Gehäuses (5) bedienbare, mit dem Mikrometerwerk (1) wirkverbundene Betätigungsorgane aufweist.

6. Rotationsmikrotom nach einem der Ansprüche 1 bis 5, **dadurch gekennzeichnet, dass** in der umlaufenden Wandung (8) des Gehäuses (5), in einer der Seitenwandungen (18), ein Durchgang (19) für ein Betätigungsorgan des Mikrometerwerks (1) ausgebildet ist,
wobei das Betätigungsorgan vorzugsweise als Handrad (4, 20) ausgeführt ist.

7. Rotationsmikrotom nach einem der Ansprüche 1 bis 6, **dadurch gekennzeichnet, dass** in der umlaufenden Wandung (8) des Gehäuses (5), in einer der Seitenwandungen (21), ein Durchgang (22) für ein Betätigungsorgan des Grobtriebs (54) ausgebildet ist,
wobei das Betätigungsorgan vorzugsweise als Handrad (23) ausgeführt ist.

8. Rotationsmikrotom nach einem der Ansprüche 1 bis 7, **dadurch gekennzeichnet, dass** die Spindel (26) über eine Zahnriemenscheibe (31) drehangetrieben ist und dass ggf. zwischen dem Antrieb und der Spindel (26) eine Friktionsscheibe (32) wirkt.

9. Rotationsmikrotom nach einem der Ansprüche 1 bis 8, **dadurch gekennzeichnet, dass** der Zustellkolben (11) mittels zweier einander gegenüberliegender Kreuzrollenführungen (33) geführt ist.

10. Rotationsmikrotom nach einem der Ansprüche 1 bis 9, **dadurch gekennzeichnet, dass** der Rahmen (25) einen innerhalb des Gehäuses (5) an der Gehäuseinnenwandung vertikal geführten Führungsbereich (35) aufweist,
wobei der Führungsbereich (35) des Rahmens (25) gegenüber der Gehäuseinnenwandung mittels Linearführung, vorzugsweise mittels Wälzlager- bzw. Kreuzrollenführung (36), vertikal geführt ist und
wobei beidseits des sich vertikal erstreckenden Durchgangs (10) für den Zustellkolben (11) eine Kreuzrollenführung (36) angeordnet ist.

11. Rotationsmikrotom nach einem der Ansprüche 1 bis 10, **dadurch gekennzeichnet, dass** die Kreuzrollenführung (33, 36) mit einer Zwangszentrierung ausgestattet ist
und/oder dass die Kreuzrollenführung (33, 36) einen Kreuzrollenkäfig und den Führungsleisten (37) zugeordnete Zwangsführungselemente, vorzugsweise eine Zahnschiene und ein Zahnrad oder mehrere Zahnräder, umfasst.

12. Rotationsmikrotom nach einem der Ansprüche 1 bis 11, **dadurch gekennzeichnet, dass** im oberen Teil der umlaufenden Wandung (8) des Gehäuses (5) ein sich von der Rückseite bis zur Vorderseite des Gehäuses (5) erstreckender flacher Durchgang (38) ausgebildet ist, durch den sich eine mit dem Rahmen (25) der Zustelleinrichtung (24) verbundene bandartige Abdeckung (39) für den Durchgang (10) des Zustellkolbens (11) erstreckt, die auf der Rückseite des Gehäuses (5) elastisch angelenkt ist.

13. Rotationsmikrotom nach einem der Ansprüche 1 bis 12, **dadurch gekennzeichnet, dass** eine Rückzugsautomatik (40) hubweise auf die gesamte Zustelleinrichtung (24) wirkt, indem ein Rückzugsmechanismus (41) die Spindel (26) gegen die Kraft eines Federpakets (42) entgegen der Zustellrichtung drückt,
wobei das Federpaket (42) zwischen einer Schulter (43) der Spindel (26) und dem Rahmen (25) der Zustelleinrichtung (24) angeordnet ist,
wobei der Rückzugsmechanismus (41) vorzugsweise ein durch den Hub des Mikrometerwerks (1) betätigtes Stellorgan umfasst, welches unmittelbar oder mittelbar auf die Spindel (26) entgegen deren Vorschubrichtung wirken kann und,
wobei das Stellorgan die Spindel (26) um etwa 0,05 mm je Hub des Mikrometerwerks (1) zurückzieht.

14. Rotationsmikrotom nach Anspruch 13, **dadurch gekennzeichnet, dass** das Stellorgan über einen die Spindel (26) umgebenden Stellring (45) in etwa orthogonal auf die Spindel (26) wirkt und diese dabei axial entgegen der Vorschubrichtung wegdrückt und
der Stellring (45) einen äußeren und einen inneren Ring (46, 47) umfasst, wobei das Stellorgan über eine Welle (48) auf den äußeren Stellring (46) greift und der innere Stellring (47) mit der Spindel (26) wirkverbunden ist und wobei die beiden Ringe (46, 47) schwenkbar miteinander verbunden sind.

15. Rotationsmikrotom nach einem der Ansprüche 1 bis 14, **dadurch gekennzeichnet, dass** zur schnellen Zustellung der Objekthalteeinrichtung ein von außerhalb des Gehäuses (5) vorzugsweise über ein Handrad (23) betätigbarer, auf die Spindel (26) wirkender Grobtrieb (54) vorgesehen ist,
wobei der Grobtrieb (54) die Drehbewegung einer mit dem Handrad (23) fest verbundenen Welle (55) über eine Rutschkupplung (56) und vorzugsweise über ein Gelenk auf die Spindel (26) überträgt und
wobei die Rutschkupplung (56) zwei gegen Federdruck gegeneinander gepresste Scheiben (57) umfasst, die bei Überschreiten eines vorgegebenen Widerstands gegeneinander durchrutschen.

16. Rotationsmikrotom nach einem der Ansprüche 1 bis 15, **dadurch gekennzeichnet, dass** das Gehäuse (5) insgesamt auf einer Bodenplatte (60) sitzt, die zur Aufnahme der Messerhalteeinrichtung (6) von dem Gehäuse (5) abragt und
dass auf der Seite der Objekthalteeinrichtung eine Bodenplatte (60) von dem Gehäuse (5) abragt und dass die Messerhalteeinrichtung (6) auf der Bodenplatte (60) sitzt,
wobei die Bodenplatte (60) eine vorzugsweise orthogonal zu der Frontplatte (12b) verlaufende Führungseinrichtung (61) umfasst, entlang der die Messerhalteeinrichtung (6) verschiebbar ist.

## Claims

1. Rotary microtome, having a micrometer mechanism (1), an object retention device which is associated with the micrometer mechanism (1), a drive for the micrometer mechanism (1) for vertically moving the object retention device, a frame for receiving the micrometer mechanism and optionally the drive, the frame comprising a peripheral wall and forming a monolithic housing (5), a blade retention device (6) which is arranged opposite the object retention device outside the housing (5) and which carries a blade (7), the micrometer mechanism (1) moving a positioning device (24) which carries the object retention device vertically upwards and downwards, the positioning device (24) comprising a rotationally driven spindle (26) and a positioning piston (11) which can be horizontally displaced via the spindle (26) and to the free end of which the object retention device is articulated, and the spindle (26) extending at the drive side into the positioning piston (11) and being supported against a frame (25),
**characterised in that** the positioning piston (11) is guided in a rotationally secure manner with respect to the frame (25) by means of transverse roller guiding (33), and **in that** the spindle (26) is operationally connected to the positioning piston (11) by means of a spindle nut (27), a pressure sleeve (29) which acts between the spindle nut (27) and an inner wall (28) of the positioning piston (11), and by means of stops (30) between the spindle nut (27) and the pressure sleeve (29).

2. Rotary microtome according to claim 1, **characterised in that** the housing (5) in addition to the peripheral wall (8) comprises an integral front wall (9) having a passage (10) for a positioning piston (11) having an object retention device
and/or **in that** the frame or housing (5) which forms the peripheral wall (8) is constructed in an integral manner,
the housing (5) being able to be produced from metal, preferably light metal, in particular from aluminium or an aluminium alloy.

3. Rotary microtome according to claim 1 or claim 2, **characterised in that** the housing (5) is supplemented by a back plate (12a).

4. Rotary microtome according to claim 2 or claim 3, **characterised in that** the passage (10) for vertically moving the positioning piston (11) which projects therethrough extends substantially vertically over the front wall (9).

5. Rotary microtome according to any one of claims 2 to 4, **characterised in that** the housing (5) is supplemented by a front plate (12b) which covers the integral front wall (9) and which has a corresponding passage (10) for the positioning piston (11)
and/or **in that** the front plate (12b) has further recesses (13) for actuating members which can be operated from outside the housing (5) and which are operationally connected to the micrometer mechanism (1).

6. Rotary microtome according to any one of claims 1 to 5, **characterised in that**, in the peripheral wall (8) of the housing (5), in one of the side walls (18), there is formed a passage (19) for an actuating member of the micrometer mechanism (1),
the actuating member preferably being constructed as a hand wheel (4, 20).

7. Rotary microtome according to any one of claims 1 to 6, **characterised in that**, in the peripheral wall (8) of the housing (5), in one of the side walls (21), there is formed a passage (22) for an actuating member of the coarse drive (54), the actuating member preferably being constructed as a hand wheel (23).

8. Rotary microtome according to any one of claims 1 to 7, **characterised in that** the spindle (26) is rotationally driven by means of a toothed belt disc (31) and **in that** a friction disc (32) is optionally operational between the drive and the spindle (26).

9. Rotary microtome according to any one of claims 1 to 8, **characterised in that** the positioning piston (11) is guided by means of two mutually opposed transverse roller guides (33).

10. Rotary microtome according to any one of claims 1 to 9, **characterised in that** the frame (25) has a guiding region (35) which is guided vertically inside the housing (5) on the housing inner wall,
the guiding region (35) of the frame (25) being vertically guided opposite the housing inner wall by means of a linear guide, preferably by means of a roller bearing guide or a transverse roller guide (36) and
a transverse roller guide (36) being arranged at both sides of the vertically extending passage (10) for the positioning piston (11).

11. Rotary microtome according to any one of claims 1 to 10, **characterised in that** the transverse roller guide (33, 36) is provided with a forced centering system and/or **in that** the transverse roller guide (33, 36) comprises a transverse roller cage and forced guiding elements which are associated with the guiding rails (37), preferably a toothed rail and a toothed wheel or a plurality of toothed wheels.

12. Rotary microtome according to any one of claims 1 to 11, **characterised in that** in the upper portion of the peripheral wall (8) of the housing (5) there is formed a flat passage (38) which extends from the rear side to the front side of the housing (5) and through which there extends a strip-like cover (39) which is for the passage (10) of the positioning piston (11), is connected to the frame (25) of the positioning device (24) and is resiliently articulated at the rear side of the housing (5).

13. Rotary microtome according to any one of claims 1 to 12, **characterised in that** an automatic retraction system (40) acts stroke-by-stroke on the entire positioning device (24) in that a retraction mechanism (41) presses the spindle (26) against the positioning device counter to the force of a spring assembly (42),
the spring assembly (42) being arranged between a shoulder (43) of the spindle (26) and the frame (25) of the positioning device (24),
the retraction mechanism (41) preferably comprising an actuating member which is actuated by the stroke of the micrometer mechanism (1) and which can act directly or indirectly on the spindle (26) counter to the feed direction thereof,
and the adjustment member retracting the spindle (26) by approximately 0.05 mm per stroke of the micrometer mechanism (1).

14. Rotary microtome according to claim 13, **characterised in that** the adjustment member acts substantially in an orthogonal manner on the spindle (26) by means of an adjustment ring (45) which surrounds the spindle (26) and presses it away axially counter to the feed direction and the adjustment ring (45) comprises an outer and an inner ring (46, 47), the adjustment member engaging on the outer adjustment ring (46) by means of a shaft (48) and the inner adjustment ring (47) being operationally connected to the spindle (26) and the two rings (46, 47) being pivotably connected to each other.

15. Rotary microtome according to any one of claims 1 to 14, **characterised in that** in order to rapidly position the object retention device, there is provided a coarse drive (54) which can be activated from outside the housing (5), preferably by means of a hand wheel (23), and which acts on the spindle (26),
the coarse drive (54) transferring the rotational movement of a shaft (55) which is securely connected to the hand wheel (23) by means of a slip clutch (56), and preferably by means of an articulation, to the spindle (26) and
the slip clutch (56) comprising two discs (57) which are pressed against each other counter to resilient pressure and which slide through relative to each other when a predetermined resistance is exceeded.

16. Rotary microtome according to any one of claims 1 to 15, **characterised in that** the housing (5) generally rests on a base plate (60), which protrudes from the housing (5) in order to receive the blade retention device (6) and **in that** at the side of the object retention device a base plate (60) protrudes from the housing (5) and **in that** the blade retention device (6) rests on the base plate (60), the base plate (60) having a guide device (61) which preferably extends orthogonally with respect to the front plate (12b) and along which the blade retention device (6) can be moved.

## Revendications

1. Microtome rotatif, comportant un mécanisme micrométrique (1), un dispositif porte-objet associé au mécanisme micrométrique (1), un système d'entraînement pour le mécanisme micrométrique (1) destiné au déplacement vertical du dispositif porte-objet, un bâti destiné à recevoir le mécanisme micrométrique et, le cas échéant, le système d'entraînement, ledit bâti comprenant une paroi périphérique et formant en l'occurrence un carter (5) monobloc, un dispositif porte-lame (6), portant une lame (7) et disposé en dehors du carter (5) en regard du dispositif porte-objet, le mécanisme micrométrique (1) déplaçant verticalement vers le haut et le bas un dispositif de positionnement (24) qui porte le dispositif porte-objet, le dispositif de positionnement (24) comprenant une broche (26) entraînée en rotation et un piston de positionnement (11), qui est mobile horizontalement par l'intermédiaire de la broche (26) et à l'extrémité libre duquel est articulé le dispositif porte-objet, et ladite broche (26) s'étendant, du côté entraînement, à l'intérieur du piston de positionnement (11) et prenant appui contre un cadre (25),
**caractérisé en ce que** le piston de positionnement (11) est logé immobile en rotation par rapport au cadre (25) au moyen d'un guidage à roues en croix (33), et **en ce que** la broche (26) est reliée de manière active avec le piston de positionnement (11) par l'intermédiaire d'un écrou de broche (27), d'un manchon de pression (29) agissant entre l'écrou de broche (27) et une paroi intérieure (28) du piston de positionnement (11), ainsi que par l'intermédiaire d'éléments d'arrêt (30) entre l'écrou de broche (27) et le manchon de pression (29).

2. Microtome rotatif selon la revendication 1, **caractérisé en ce que** le carter (5), outre la paroi périphérique (8), comprend une paroi frontale (9) intégrale avec un passage (10) pour un piston de positionnement (11) avec un dispositif porte-objet, et/ou **en ce que** le bâti ou le carter (5) formant la paroi périphérique (8) est réalisé d'un seul tenant, ledit carter (5) pouvant être réalisé en métal, de préférence dans un métal léger, en particulier en aluminium ou dans un alliage d'aluminium.

3. Microtome rotatif selon la revendication 1 ou 2, **caractérisé en ce que** le carter (5) est complété par une plaque arrière (12a).

4. Microtome rotatif selon la revendication 2 ou 3, **caractérisé en ce que** le passage (10), pour le déplacement vertical du piston de positionnement (11) passant à travers celui-ci, s'étend sensiblement verticalement au-delà de la paroi frontale (9).

5. Microtome rotatif selon l'une quelconque des revendications 2 à 4, **caractérisé en ce que** le carter (5) est complété par une plaque frontale (12b), qui masque la paroi frontale (9) intégrale et qui est munie du passage (10) correspondant pour le piston de positionnement (11), et/ou **en ce que** la plaque frontale (12b) comporte d'autres évidements (13) pour des organes de manoeuvre, pouvant être commandés de l'extérieur du carter (5) et reliés de manière active au mécanisme micrométrique (1).

6. Microtome rotatif selon l'une quelconque des revendications 1 à 5, **caractérisé en ce qu'**un passage (19) pour un organe de manoeuvre du mécanisme micrométrique (1) est réalisé dans la paroi périphérique (8) du carter (5), dans l'une des parois latérales (18), ledit organe de manoeuvre étant réalisé de préférence sous la forme d'un volant (4, 20).

7. Microtome rotatif selon l'une quelconque des revendications 1 à 6, **caractérisé en ce qu'**un passage (22) pour un organe de manoeuvre du système d'avance rapide (54) est réalisé dans la paroi périphérique (8) du carter (5), dans l'une des parois latérales (21), ledit organe de manoeuvre étant réalisé de préférence sous la forme d'un volant (23).

8. Microtome rotatif selon l'une quelconque des revendications 1 à 7, **caractérisé en ce que** la broche (26) est entraînée en rotation par une poulie à courroie crantée (31) et **en ce que**, le cas échéant, un disque de friction (32) agit entre le système d'entraînement et la broche (26).

9. Microtome rotatif selon l'une quelconque des revendications 1 à 8, **caractérisé en ce que** le piston de positionnement (11) est guidé au moyen de deux guidages à roues en croix (33), disposés l'un en face de l'autre.

10. Microtome rotatif selon l'une quelconque des revendications 1 à 9, **caractérisé en ce que** le cadre (25) comporte une zone de guidage (35) guidée verticalement à l'intérieur du carter (5) sur la paroi intérieure du carter, ladite zone de guidage (35) du cadre (25) étant guidée verticalement par rapport à la paroi intérieure du carter, au moyen d'un guidage linéaire, de préférence au moyen d'un guidage à roulement à billes ou d'un guidage à roues en croix (36), et un guidage à roues en croix (36) étant agencé de part et d'autre du passage (10) orienté verticalement pour le piston de positionnement (11).

11. Microtome rotatif selon l'une quelconque des revendications 1 à 10, **caractérisé en ce que** le guidage à roues en croix (33, 36) est équipé d'un centrage forcé, et/ou **en ce que** le guidage à roues en croix (33, 36) comprend une cage de roues en croix et des éléments de guidage forcé associés aux bandes de guidage (37), de préférence un rail denté ou une roue dentée ou plusieurs roues dentées.

12. Microtome rotatif selon l'une quelconque des revendications 1 à 11, **caractérisé en ce que** dans la partie supérieure de la paroi périphérique (8) du carter (5) est réalisé un passage (38) plat, qui s'étend depuis la face arrière jusqu'à la face avant du carter (5) et à travers lequel s'étend un cache (39) en forme de bande pour le passage (10) du piston de positionnement (11), lequel cache est relié au cadre (25) du dispositif de positionnement (24) et est articulé élastiquement sur la face arrière du carter (5).

13. Microtome rotatif selon l'une quelconque des revendications 1 à 12, **caractérisé en ce qu'**un automatisme de rappel (40) agit par levage sur l'ensemble du dispositif de positionnement (24), du fait qu'un mécanisme de rappel (41) pousse la broche (26) dans le sens opposé au sens d'avance à l'encontre de la force d'un paquet de ressorts (42), ledit paquet de ressorts (42) étant disposé entre un épaulement (43) de la broche (26) et le cadre (25) du dispositif de positionnement (24), ledit mécanisme de rappel (41) comprenant de préférence un actionneur, qui est manoeuvre par la course du mécanisme micrométrique (1) et qui peut agir directement ou indirectement sur la broche (26) dans le sens opposé au sens d'avance de celle-ci, ledit actionneur ramenant vers l'arrière la broche (26) sur environ 0,05 mm à chaque course du mécanisme micrométrique (1).

14. Microtome rotatif selon la revendication 13, **caractérisé en ce que** l'actionneur agit sensiblement orthogonalement sur la broche (26) par l'intermédiaire d'une bague de réglage (45) entourant la broche (26) et repousse, en l'occurrence, celle-ci axialement dans le sens opposé au sens d'avance, et la bague de réglage (45) comprend une bague extérieure (46) et une bague intérieure (47), l'actionneur agit sur la bague extérieure (46) par l'intermédiaire d'un arbre (48), et la bague intérieure (47) est reliée de manière active à la broche (26), et les deux bagues (46, 47) étant reliées de manière pivotante l'une à l'autre.

15. Microtome rotatif selon l'une quelconque des revendications 1 à 14, **caractérisé en ce que** pour l'avance rapide du dispositif porte-objet, il est prévu un système d'avance rapide (54), actionnable de l'extérieur du carter (5), de préférence au moyen d'un volant (23), et agissant sur la broche (26), ledit système d'avance rapide (54) transmettant à la broche (26) le mouvement de rotation d'un arbre (55), solidaire du volant (23), par l'intermédiaire d'un couplage à friction (56) et, de préférence, par l'intermédiaire d'une articulation, et ledit couplage à friction (56) comprenant deux disques (57), qui sont pressés l'un contre l'autre à l'encontre de la pression d'un ressort et qui patinent l'un contre l'autre en cas de dépassement vers le haut d'une résistance prédéfinie.

16. Microtome rotatif selon l'une quelconque des revendications 1 à 15, **caractérisé en ce que** le carter (5) est posé dans son ensemble sur une plaque de fond (60) qui s'avance en saillie depuis le carter (5) pour recevoir le dispositif porte-lame (6), et **en ce que** sur le côté du dispositif porte-objet, une plaque de fond (60) s'avance en saillie depuis le carter (5) et **en ce que** le dispositif porte-lame (6) est posé sur la plaque de fond (60), ladite plaque de fond (60) comprenant un dispositif de guidage (61), qui s'étend de préférence orthogonalement à la plaque frontale ( 12b) et le long duquel le dispositif porte-lame (6) est apte à se déplacer.
